# EUROPEAN PATENT APPLICATION

(11) **EP 1 598 981 A2**
(43) Date of publication of application: **23.11.2005**
(21) Application number: 05253009.4
(22) Date of filing: 17.05.2005
(51) Int. Cl.: H04L 12/24

(54) **Qualitative determination of system health in centralized network management**

(30) Priority: 17.05.2004 US 571521 P
(71) Applicant: Pointshot Wireless Inc., Ottawa, ON K2E 8A9 (CA)
(72) Inventor: Griffin, Shawn, Ottawa, Ontario K1S 1X9 (CA); Gallagher, Warren, Richmond, Ontario K0A 2Z0 (CA)
(74) Representative: Ahmad, Sheikh Shakeel

(57) **Abstract**

A centralized network management system for a network including remote in-motion wireless nodes comprising a multiplicity of remote logging systems operating on each of a multiplicity of wireless network routers, a log parser means for parsing the information provided by each of said multiplicity of remote logging systems and generating a fact stream, a system profile database, a fact checker means for checking said fact stream against said system profile database and a notifier. The system profile database contains information on the GPS location of a vehicle operator's depot, GPS coordinates of known dead-zones for each wireless network link utilized, normal shutdown time of the vehicle route, and times the system is expected to be up. The system combines this time-of-day and location information to help make qualitative determinations about the effective state of the managed network.

## Description

### FIELD OF THE INVENTION

The present invention relates generally to centralized network management. More particularly, the present invention relates to centralized network management of remote in-motion wireless nodes.

### BACKGROUND OF THE INVENTION

Currently, the provision of Internet access on passenger trains, buses, and other moving vehicles involve placing a router on each vehicle that provides local area network (LAN) services on the vehicle. Each router typically routes traffic to the Internet via various wide area network (WAN) wireless networks. A variety of WAN devices are located within the service area in which the vehicle normally moves and includes devices and elements such as, but not limited to, digital video broadband satellite downlinks, cellular packet data, and low earth orbit (LEO) satellites.

The difficulty is that there are many conditions whereby a link can fail. For instance, if line-of-sight is lost to the digital video broadband satellite then no information can be transmitted to the vehicle over that link. This link is the primary in-motion broadband downlink. One would think that the loss of the primary in-motion broadband downlink should always be flagged as a failure, or reduced capacity situation to the network operator. However, there are times-of-day and geographic locations where that link should fail, for instance a train may pull into an underground station where line-of-sight is disrupted, or there may not be a satellite available overhead at a certain time of day. Such situations, or events, can be captured in an event log.

In this context, network management software is used to generate an event log stream that is sent to a central network management server on the Internet. The network management system (NMS) needs to determine the system health of these remote nodes by analyzing the event logs.

Current network management systems query the management information base (MIB) on remote nodes and they also receive error logs in the form of trap messages. Traps are synchronous messages generated by the process or its underlying kernel thread. They are delivered to the process that caused the signal. The network management station may also ping network elements to determine if they are still accessible on the network. System states usually reflect best-known status of links and subsystems on the network element with simple filtering to weed out traps that seem to be normal. The key is to provide useful, qualitative information about the health of the systems without raising error indicators, alarms and notifications for what are normal operations.

Unfortunately, current systems are all subject to the disadvantage of not being able to adjust their expectations of the network environment according to the location of the in-motion wireless network nodes and the time of day. Because of this, current network management systems generate "false" exception conditions when expected failures occur, such as when a train goes through a tunnel. Network operators may already be aware of dead-zones in the wireless network, or times of day during which the network is not expected to be operational, and need not be notified of wireless link failures on these occasions. The number of such failures in a wireless network where the nodes of the network are in motion and where some or all of the wireless links with each node are very likely to be severed on occasion may overwhelm network operators, who might otherwise be dealing with unexpected errors.

It is, therefore, desirable to provide a centralized network management system for in-motion wireless network nodes which can combine the use of time-of-day and location information to help make qualitative determinations about the effective state of a managed network.

### SUMMARY OF THE INVENTION

It is an object of the present invention to obviate or mitigate at least one disadvantage of the prior art.

In a first aspect, the present invention provides a system of centrally managing a network that includes in-motion wireless network nodes. Each remote vehicle is equipped with a wireless network router (WNR) that generates a log of significant events such as a communication link changing state. The WNR forwards its event logs to a centralized server on the Internet that is the network management system (NMS). These event logs include timestamps and GPS coordinates. The NMS creates default state values for the network entity. For instance, the default state for a particular network link is likely disconnected. The NMS scans the incoming logs and matches on logs of significant events, such as a communication link changing state. The NMS updates the state values based on the received logs. For instance, a log indicating that ppp0 is up might indicate that a cellular packet data connection has been established on device ppp0. Information maintained in an NMS database is used to modify state information against criteria that are not in the logs. For instance, a database entry might indicate that there is a satellite dead-zone within a certain set of GPS coordinates, or at a certain time of day. In this case, the satellite link going down should be expected and not treated as an error; it is a known valid condition. Overall system state is asserted based on the adjusted variables, and the system state can be reported in interactive displays. The system state can be checked against notification criteria as to whether an alert should be raised and how. For example, a satellite down indication happening in an area not known to have problems could cause a page to be sent to a network administrator.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures.
FIGURE 1 is an illustration of a wireless network with an in-motion wireless network node aboard a train in accordance with the present invention.
FIGURE 2 is a block diagram representation of a centralized network management system for remote in-motion wireless nodes in accordance with the present invention.
FIGURE 3 is a flowchart illustrating the method for centralized network management of remote in-motion wireless nodes in accordance with the present invention.

### DETAILED DESCRIPTION

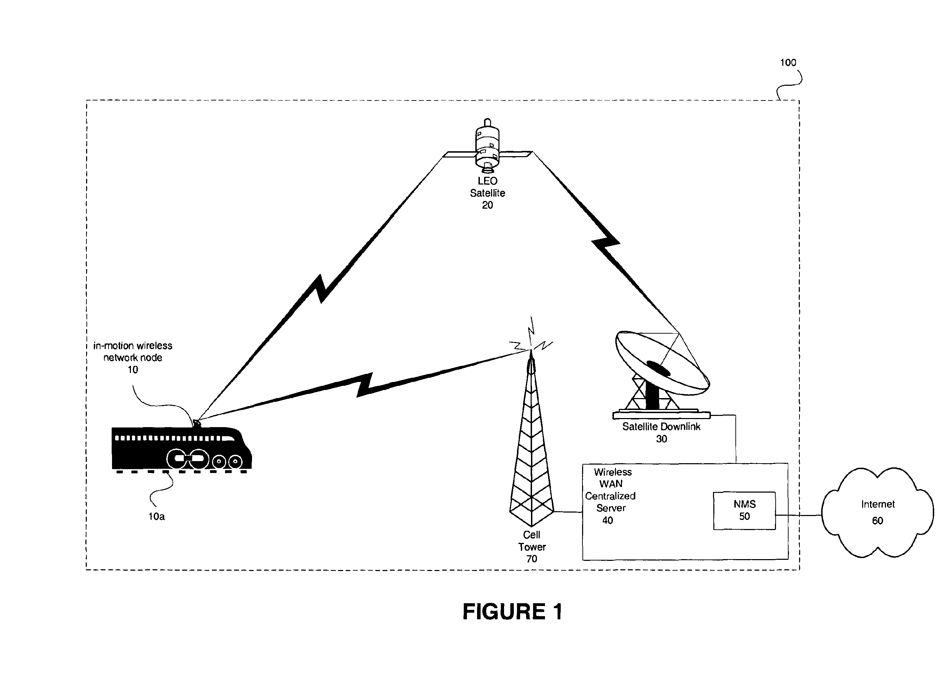

Generally, the present invention provides a method and system for centrally managing a network that includes in-motion wireless network nodes such as vehicles. The embodiments of the present invention will now be discussed with reference to **FIGURES 1-3.**

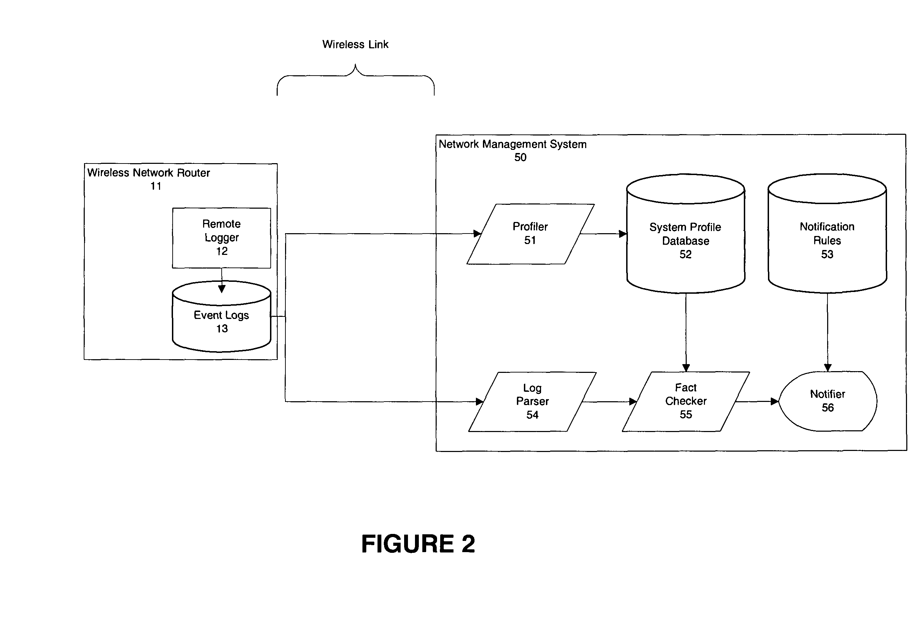

**FIGURE 1** shows a wireless network **100** with an in-motion wireless network node **10** aboard a train **10a** in accordance with the present invention. It should be readily understood that while a train **10a** is specifically shown, the vehicle equipped with the in-motion wireless network node may be any suitable mobile vehicle such as, but not limited to, trains, planes, automobiles, ships, and any other terrestrial, nautical, or aeronautical vehicle. Further within the intended scope of the present invention, there may typically be one or more vehicles of the same or differing type within any given network that together operate using the same centralized network management system. Specifically, each in-motion wireless network node **10** within the wireless network **100** is in the form of a wireless network router (WNR) (shown in **FIGURE 2** as element **11**).

The in-motion wireless network node **10** is in wireless communication with a centralized wireless area network (WAN) server **40** via various wireless transmission mechanisms with the wireless network **100**. Such mechanisms are shown to include a LEO satellite **20**, a satellite downlink **30**, and a cellular transmission tower **70**. However, it should further be recognized that various other transmission mechanisms might be used such as, but not limited to, other in-motion wireless nodes (not shown) that operate within the wireless network **100.** The WAN server **40** connects the wireless network **100** to the Internet **60** as shown, though any other type of network such as a private intranet can be used in lieu of the public Internet. The WAN server includes a network management system **50** in communication with the WNR as will be described in further detail with regard to **FIGURE 2**.

With further reference to **FIGURE 2**, a block diagram in accordance with the present invention illustrating a centralized network management system for remote in-motion wireless nodes will now be described in some detail. For clarity of illustration in **FIGURE 2**, some parts of the wireless network **100** shown in **FIGURE 1** have been omitted. The two basic elements of the present invention include the WNR **11** located at the wireless node **10** (previously shown in **FIGURE 1**) and the NMS **50** located at the WAN server **40** (previously shown in **FIGURE 1**). The WNR **11** is equipped with a remote logger **12** that generates event logs **25** of significant events such as a communication link changing state. Events that can be considered "significant" are when the communication link changes state. Such changes would occur, for example, when a train goes through a tunnel or a bus drives between two tall buildings. The WNR **11** includes geographical locator and time of day capabilities via known mechanisms (not shown) such as a global positioning system (GPS) device and time/date stamp device that include location and time information for each event in the event log **13**.

With continued reference to **FIGURE 2**, the WNR **11** forwards the event logs **13** to the NMS **50** that is operating on the centralized WAN server **40** and connected to the Internet **60** as shown in **FIGURE 1**. The WNR **11** connects to the centralized WAN server **40** via a wireless link in any suitable known manner of radio transmission protocol via any suitable known transmission mechanisms such as cellular network towers, LEO satellites, and satellite downlinks as mentioned above in regard to **FIGURE 1**. The NMS **50** contains a system profile database **52** that is continually updated by a profiler **51**. The NMS **50** also contains a log parser **54** that processes the event logs **13** received from the WNR **11** and generates a fact stream for use by a fact checker **55**. The fact checker **55** verifies the fact stream by comparing it to the information in the system profile database **52** and then, based on that comparison sends a qualitative state determination to the notifier **56**. The fact checker **55** determines whether an event is "significant" based on the system profiles database **52**. The notifier **56** compares the qualitative state determination to a set of notification rules **53** and notifies a system administrator or other relevant party in some suitable manner - e.g., a page message, electronic mail, or some other alarm indication mechanism.

The remote logger **12** in **FIGURE 2** operates aboard the WNR **11** and generates system event logs that include timestamps and GPS coordinates which allow system conditions to be checked against time-of-day, duration and location criteria. The fact checker **55** is an expert system running on the NMS **50** that is given a fact stream from the log parser **54**. The fact checker **55** makes qualitative state determinations utilizing a system profile database **52**. The system profile database **52** contains vehicle operations data records that can be used by the fact checker **55** to make qualitative state determinations. It should be understood that criteria taken into account by such qualitative state determinations could include known dead-zones in the wireless network or times of day during which the network is not expected to be operational. Under such criteria, it is readily apparent that a network operator need not be notified of wireless link failures on these occasions. The system profile database **52** contains records for each vehicle operator that include, but are not limited to, GPS location for the operator's depot, GPS coordinates of known dead-zones for each WAN link utilized, normal shutdown time of the vehicle route and times that the system is expected to be up. The profiler **51** is an optional expert system that learns from the event logs **13** to populate the system profile database **52**. As mentioned, the profiler **51** is optional and is not necessary for the functioning of the present invention. The system profile database **52** can be populated manually or it can be populated by another automated system. Still further, the system profile database **52** can also be populated by data accumulated by the present invention during system build out and testing. The log parser **54** runs on the NMS **50** and analyzes incoming log streams from the WNR **11**, converting those into fact streams useable by the fact checker **55**. The notifier **56** runs on the NMS **50** and receives state determinations from the fact checker **55**. Changes in overall system state are checked against notification rules **53** to determine if network operations personnel need to be notified of an event, for example sending a page, automated e-mail, or generating a printout.

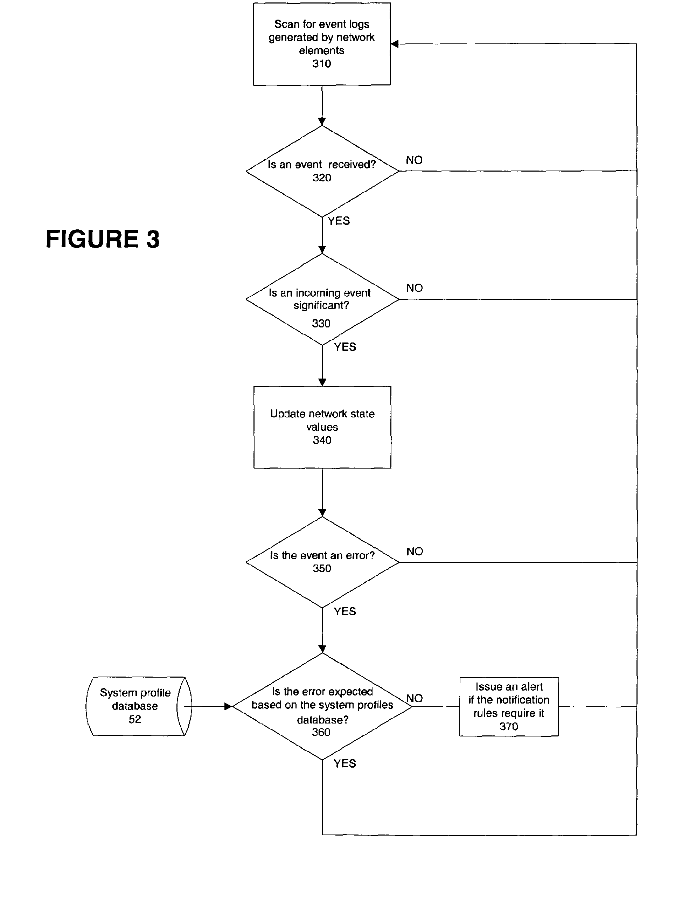

In operation, the present invention embodies a method for centralized network management of remote in-motion wireless nodes as illustrated in the **FIGURE 3** flowchart. The **FIGURE 3** flowchart will now be described with regard to the elements shown in **FIGURES 1** and **2** and direct reference to flowchart elements of **FIGURE 3**. From the perspective of the NMS **50**, the inventive method at step **310** continually scans for incoming event logs generated and wirelessly transmitted from the one or more wireless nodes located on a vehicle such as train **10a**. When the NMS **50** detects an event at step **320**, a check is made at step **330** to determine whether or not the event is "significant" as defined above. If no event is received, scanning of course continues at step **310**. It should of course be understood that the level of significance for any given event might change in accordance with the network user's given application and requirements, such that significance of any given event may be a customized, user-defined attribute without straying from the intended scope of the present invention. If the event is determined at step **330** to not be significant, scanning continues at step **310**. If an event is determined at step **330** to be significant, then the method updates the network's state values at step **340**. The event is then determined via the fact checker to be an error at step **350**. If the event is not an error, scanning continues at step **310**. If the event is an error, the fact checker determines at step **360** whether the error is an expected error based on the system profiles database **52**. If the error detected is expected based on the system profiles database **52**, then scanning continues at step **310**. However, if the error detected is not expected based on the system profiles database, then an alert at step **370** is issued if the notification rules require such. This is accomplished when the notifier compares the qualitative state determination to a set of notification rules and notifies a system administrator or appropriate entity by raising an alert when the notification rules indicate that the current network state requires the issue of an alert. Rule requirements of any such alert are of course customizable for any given network application and may include an alert for complete system failure, reduced system availability levels, or any variation therebetween.

Accordingly, the combination of time of day information and location to make qualitative determinations about the effective state of a network contributes to effective and efficient management of a fleet of in-motion wireless network nodes. This reduces "false" exception conditions that would otherwise overwhelm network operators. The centralized network management system for in-motion wireless network nodes of the present invention therefore translates relevant log events into a fact stream that are processed by a predicate-logic system to make qualitative determinations about the effective state of a managed network.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A centralized network management system for a network including remote in-motion wireless nodes, said system comprising:
a log parser for parsing the information provided by each of a multiplicity of remote logging systems and generating a fact stream;
a system profile database including node data records; and
a fact checker for checking said fact stream against said node data records.

2. The system as claimed in **Claim 1** further including a profiler for populating said system profile database in response to event data provided to said system.

3. The system as claimed in **Claim 2**, wherein said event data is provided to said system from at least one of said wireless nodes via a wireless link.

4. The system as claimed in **any preceding Claim** further including a notifier for providing a system alert upon determination of a pre-specified fact identified by said fact checker from said fact stream.

5. The system as claimed in **Claim 4** further including a set of notifications rules
wherein said notifier provides said system alert in accordance with said notification rules upon said determination of said pre-specified fact.

6. A system for centralized network management, said system comprising:
one or more wireless nodes locatable within a mobile vehicle;
a network management system (NMS) locatable within a centralized wireless area network server and connected to said one or more wireless nodes via a wireless link;
wherein network events logged at said one or more wireless nodes are parsed at said NMS in a manner such that certain of said network events trigger a notification message.

7. The system as claimed in **Claim 6**, wherein said one or more wireless nodes each include a remote logger for gathering event logs of said network events.

8. The system as claimed in **Claim 7**, wherein said NMS includes
a log parser for parsing said event logs and generating a fact stream;
a system profile database including node data records that include network state data and corresponding geographic and time of day data; and
a fact checker for checking said fact stream against said node data records.

9. The system as claimed in **Claim 8** further including a profiler for populating said system profile database with historical network state data and corresponding geographic and time of day data that form said node data records.

10. The system as claimed in **Claim 8 or 9**, wherein said node data records are provided to said NMS from at least one of said wireless nodes via said wireless link.

11. The system as claimed in **Claim 8 or 9 or 10** further including a notifier for providing a system alert upon determination of a pre-specified fact identified by said fact checker from said fact stream.

12. The system as claimed in **Claim 11** further including a set of notifications rules wherein said notifier provides said system alert in accordance with said notification rules upon said determination of said pre-specified fact.

13. A method for qualitative determination of states of a wireless network, said method comprising:
scanning for event logs received from one or more wireless nodes locatable within a mobile vehicle;
receiving said event log at log parser in a central location remote from said one or more wireless nodes;
determining whether said event log represents a significant event;
upon positive determination of said significant event, updating state values of said wireless network;
determining whether said event log represents a network error;
upon positive determination of said network error, further determining whether said network error is expected; and
upon determination that said error is unexpected, issuing a notification message.

14. The method as claimed in **Claim 13** wherein said method is carried out within a wireless area network server centrally located within said wireless network.

15. The method as Claimed in **Claim 13 or 14** wherein said step of further determining whether said network error is expected is accomplished by a comparison of said network error to a historical network state residing within a system profile database.

16. The method as claimed in **Claim 15** wherein said historical network state corresponds to a previous network state and related geographical and time data.

17. The method as claimed in **Claim 15 or 16** wherein said historical network state is determined by a profiler.
